# EUROPÄISCHE PATENTANMELDUNG

(11) **EP 0 997 963 A1**
(43) Veröffentlichungstag der Anmeldung: **03.05.2000**
(21) Anmeldenummer: 99121142.6
(22) Anmeldetag: 22.10.1999
(51) Int. Cl.: H01M 10/54, H01M 6/52, C22B 7/00, B03B 9/06, C25C 1/16

(54) **Verfahren zur Verwertung unsortierter Altbatterien sowie Vorrichtung zur Durchführung dieses Verfahrens**

(30) Priorität: 27.10.1998 DE 19849385
(71) Anmelder: EISENMANN MASCHINENBAU KG, 71032 Böblingen (DE)
(72) Erfinder: Eberhard, Günter, D-71032 Böblingen (DE)
(74) Vertreter: Ostertag, Ulrich

(57) **Zusammenfassung**

Zur Verwertung unsortierter Altbatterien werden diese zunächst zerkleinert und durch einen Siebvorgang von groben Partikeln befreit. Das verbleibende Batteriepulver wird in einen alkalischen Elektrolyten gegeben, dessen pH-Wert so eingestellt ist, daß Zinkionen als Zinkat vorliegen. Das in dem Batteriepulver noch enthaltene metallische Zink wird selektiv in einem Elektrolyseprozeß anodisch in Lösung gebracht. Zur Wiedergewinnung des metallischen Zinks wird dieses aus dem Elektrolyt durch Elektrolyse abgeschieden.

## Beschreibung

Die Erfindung betrifft ein Verfahren zur Verwertung unsortierter Altbatterien, bei dem diese zerkleinert, von groben Partikeln durch Sieben befreit und das verbleibende Batteriepulver naßmetallurgisch aufbereitet wird.

Unter "unsortierten Altbatterien" werden alle Arten von Batterien und Akkumulatoren verstanden mit Ausnahme der Bleiakkumulatoren aus dem Kraftfahrzeug-Bereich.

In der Bundesrepublik Deutschland werden jährlich rund 87 Mio. Geräte und Haushaltsbatterien sowie Akkumulatoren in Verkehr gebracht. Die Inhaltsstoffe dieser Batterien und Akkumulatoren sind teilweise stark toxisch und müssen aus diesem Grunde fachgerecht entsorgt werden. Dies hat in den verschiedenen Ländern unter Einhaltung öffentlich rechtlicher Vorschriften zu erfolgen, z. B. in Deutschland der "Batterieverordnung". Grundsätzlich ist dabei zwischen einer Verwertung und einer Entsorgung zu unterscheiden. Aufgrund der Toxizität der Stoffe müßte eine Entsorgung grundsätzlich auf Sondermülldeponien erfolgen. Zum Teil findet auch heute noch eine Entsorgung als Hausmüll statt, bei der die Batterien und Akkumulatoren in geringerer Konzentration mit dem Hausmüll vermischt und auf Hausmülldeponien abgelagert werden. Unter "Verwertung" wird diejenige Aufarbeitung der Batterien und Akkumulatoren verstanden, bei der zumindest teilweise bestimmte Bestandteile wiedergewonnen werden. Die Verwertung kann insbesondere thermisch oder naßmetallurgisch erfolgen. Die thermische Verwertung, bei der die Trennung der einzelnen in den Batterien und Akkumulatoren enthaltenen Metalle durch ihre unterschiedlichen Schmelz- oder Siedepunkte erfolgt, benötigt sehr viel Heizenergie und eine nachgeschaltete Abluftreinigung. Daher ist der thermischen Verwertung eine naßmetallurgische Verwertung vorzuziehen, bei welcher die in den Batterien enthaltenen Metalle zunächst in Lösung gebracht und dann durch einen geeigneten selektiven Mechanismus voneinander getrennt werden.

Ein naßmetallurgisches Verfahren der eingangs genannten Art ist in der DE-A-42 24 884 beschrieben. Hier wird das nach der Siebung verbleibende Batteriepulver in zwei unterschiedlichen Lösungsmitteln gelöst, wodurch eine erste Trennung erfolgt. Die verschiedenen in Lösung gebrachten bzw. befindlichen Metalle werden sodann durch einen selektiven Ionenaustausch bei unterschiedlichen pH-Werten mit nachfolgender Elektrolyse metallisch gewonnen. Dieses bekannte Verfahren ist sehr aufwendig.

Aufgabe der vorliegenden Erfindung ist es, ein Verfahren der eingangs genannten Art sowie eine Vorrichtung zu schaffen, mit denen in einfacher Weise und kostengünstig eine Wiedergewinnung des Hauptbestandteiles des nach dem Sieben verbleibenden Batteriepulvers, nämlich des Zinks, möglich ist.

Diese Aufgabe wird, was das Verfahren angeht, dadurch gelöst, daß
a) das nach dem Sieben verbleibende Batteriepulver in einen alkalischen Elektrolyt gegeben wird, dessen pH-Wert so eingestellt ist, daß Zinkionen als Zinkat vorliegen;
b) das in dem Batteriepulver enthaltene metallische Zink selektiv in einem Elektrolyseprozeß anodisch in Lösung gebracht wird;
c) aus dem Elektrolyt durch Elektrolyse metallisches Zink gewonnen wird;
d) das in dem Elektrolyt verbleibende unlösliche Batteriepulver anderweitig entsorgt wird.

Bei dem erfindungsgemäßen Verfahren wird also als "selektiver Mechanismus" zur Trennung der verschiedenen metallischen Bestandteile des Batteriepulvers die anodische Oxidation eingesetzt. Da Zink nicht nur das in dem Batteriepulver am häufigsten vertretene sondern auch das unedelste Metall ist, lassen sich die Parameter des Elektrolyseprozesses so einstellen, daß nahezu ausschließlich Zink in Lösung gebracht wird, während die anderen Metalle nahezu vollständig in dem unlöslichen Anodenschlamm verbleiben, der dann anderweitig verarbeitet werden muß. Sollten gleichwohl edlere Metalle als Zink durch anodische Oxidation in geringem Umfange in Lösung gehen, so bilden sich angesichts der hohen OH⁻ -Konzentration schwerlösliche Hydroxide; diese edleren Metalle würden dann in dieser Form im Anodenschlamm verbleiben und ebenfalls nur in geringem Umfange elektrolytisch wieder abgeschieden werden. Insgesamt stellt das erfindungsgemäße Verfahren eine äußerst kostengünstige Lösung insbesondere dann dar, wenn hauptsächlich auf eine Wiedergewinnung von Zink abgestellt wird.

Besonders vorteilhaft ist das erfindungsgemäße Verfahren dann, wenn das in dem Batteriepulver enthaltene metallische Zink in demselben Elektrolyseprozeß anodisch in Lösung gebracht wird, in dem aus dem Elektrolyt kathodisch metallisches Zink gewonnen wird. Diese Verfahrensart stellt also eine Art "Raffinationsprozeß" dar, wie sie auf anderem Gebiet zur Gewinnung von hochreinem Kupfer eingesetzt wird.

Zweckmäßigerweise ist der Elektrolyt eine wässrige Lösung von Kalium- oder Natriumhydroxid, wobei die Konzentration des Hydroxids im Elektrolyten bei etwa 15% liegen kann.

Durch das in den zu entsorgenden Batterien enthaltene Ammoniumchlorid werden in den Elektrolyten Ammonium- und Chloridionen eingetragen. Daher bildet sich bei der Elektrolyse gasförmiges Chlor und Ammoniak, die abgesaugt werden sollten.

Zweckmäßig ist, wenn das gasförmige Chlor und Ammoniak zu Ammoniumchlorid umgesetzt werden. Auf diese Weise werden nicht nur die giftigen Gase unschädlich gemacht sondern darüber hinaus wird ein wiederverwertbares Produkt gewonnen.

Der Elektrolyt reichert sich im Laufe der Zeit mit Alkalichlorid an. Um ihn zu regenerieren empfiehlt es sich, eine Alkali-Chlor-Elektrolyse vorzunehmen. Auch das sich hierbei bildende Chlorgas kann in der oben schon geschilderten Weise entsorgt werden.

Im Laufe der Zeit färbt sich der Elektrolyt aufgrund von Kohlenstoffstaub, der sich im Batteriepulver befindet, schwarz. Daher sollte der Elektrolyt durch eine Mikrofiltration von Kohlenstoffstaub befreit werden.

Die oben genannte Aufgabe wird, was die Vorrichtung angeht, dadurch gelöst, daß diese umfaßt:
a) einen den Elektrolyten aufnehmenden Behälter;
b) eine zumindest teilweise in den Elektrolyten eintauchende Kathode;
c) eine zumindest teilweise in den Elektrolyten eintauchende Anode.

In dieser, das "Kernstück" der Vorrichtung bildenden Elektrolysezelle findet die "Raffination" des Zinks statt, bei der das Zink zunächst durch anodische Oxidation von den anderen metallischen Bestandteilen getrennt und sodann durch Elektrolyse in hochreiner metallischer Form wiedergewonnen wird.

Die Kathode kann als sich um ihre Längsachse drehender Zylinder ausgebildet sein. Dies erleichtert die Abnahme des sich auf der Kathodenoberfläche bildenden metallischen Zinks.

Besonders zweckmäßig ist dabei, wenn der Kathode eine Aufwickelhaspel zugeordnet ist, auf welcher das von der Mantelfläche der Kathode als Folie abziehbare metallische Zink aufwickelbar ist.

Als Material für die Kathode empfiehlt sich Edelstahl.

Wie bereits erwähnt, bildet sich am Boden des Behälters, in dem die Elektrolyse stattfindet, ein unlöslicher Anodenschlamm, welcher hauptsächlich aus ungelösten Metallpartikeln, teilweise auch aus den schwerlöslichen Metallhydroxiden edlerer Metalle als Zink besteht. Dieser Anodenschlamm muß chargenweise oder kontinuierlich entfernt werden. In diesem Zusammenhang hat sich eine Ausgestaltung der erfindungsgemäßen Vorrichtung bewährt, bei welcher die Anode als um ihre Längsachse drehbare Förderwendel ausgebildet ist. Diese Anoden-Förderwendel taucht dann mit ihrem unteren Ende in den Anodenschlamm ein, der sich naturgemäß in der Nähe dieser Anode in besonderem Maße findet. Durch Drehung der Anode in der entsprechenden Richtung wird der Anodenschlamm gefaßt, nach oben befördert und von dort in geeigneter Weise ausgeworfen.

Als Material für die Anode empfiehlt sich Graphit.

Aus Gründen, die oben bereits angesprochen wurden, umfaßt eine bevorzugte Ausführungsform der erfindungsgemäßen Vorrichtung eine Mikrofiltrationseinrichtung, mit welcher der im Behälter befindliche Elektrolyt von Kohlenstoffstaub befreit werden kann.

Das naßmetallurgisch aufzuschließende Batteriepulver enthält noch in geringem Umfange unlösliche, leichte Bestandteile, z.B. Papier- oder Kunststoffpartikel. Diese schwimmen auf der Oberfläche des Elektrolyten auf und müssen kontinuierlich oder periodisch entfernt werden. Daher empfiehlt sich, daß die erfindungsgemäße Vorrichtung eine Oberflächen-Räumeinrichtung aufweist, mit der auf der Oberfläche des Elektrolyten schwimmende Partikel entfernbar sind.

Oben wurde bereits darauf aufmerksam gemacht, daß aufgrund der Anreicherung des Elektrolyten mit Alkalichlorid eine Regeneration empfehlenswert ist. Aus diesem Grunde umfaßt eine zweckmäßige Ausgestaltung der erfindungsgemäßen Vorrichtung eine Hilfselektrolysezelle, in welcher zur Regeneration des Elektrolyten eine Alkali-Chlor-Elektrolyse durchführbar ist.

Da, wie ebenfalls schon erwähnt, sich in der oder den Elektrolysen, die bei dem erfindungsgemäßen Verfahren eingesetzt werden, schädliche Gase bilden können, empfiehlt sich eine Ausgestaltung der erfindungsgemäßen Vorrichtung, bei der eine Absaugeinrichtung vorgesehen ist, mit welcher sich bei der Elektrolyse bildende Gase, insbesondere Ammoniak und Chlor, absaugbar sind.

Die Vorrichtung kann in diesem Falle zusätzlich ein Wasserbad aufweisen, in dem das abgesaugte Ammoniak und das abgesaugte Chlor zu Ammoniumchlorid umgesetzt werden.

Ein Ausführungsbeispiel der Erfindung wird nachfolgend anhand der Zeichnung näher erläutert; es zeigen
- Figur 1:: schematisch das Gesamt-Durchflußdiagramm des erfindungsgemäßen Verfahrens zur Rückgewinnung der wesentlichen Bestandteile unsortierter Altbatterien;
- Figur 2:: schematisch im vertikalen Schnitt die Vorrichtung zur anodischen Metallauflösung und elektrolytischen Zinkgewinnung, die bei dem in Figur 1 gezeigten Verfahren Anwendung findet.

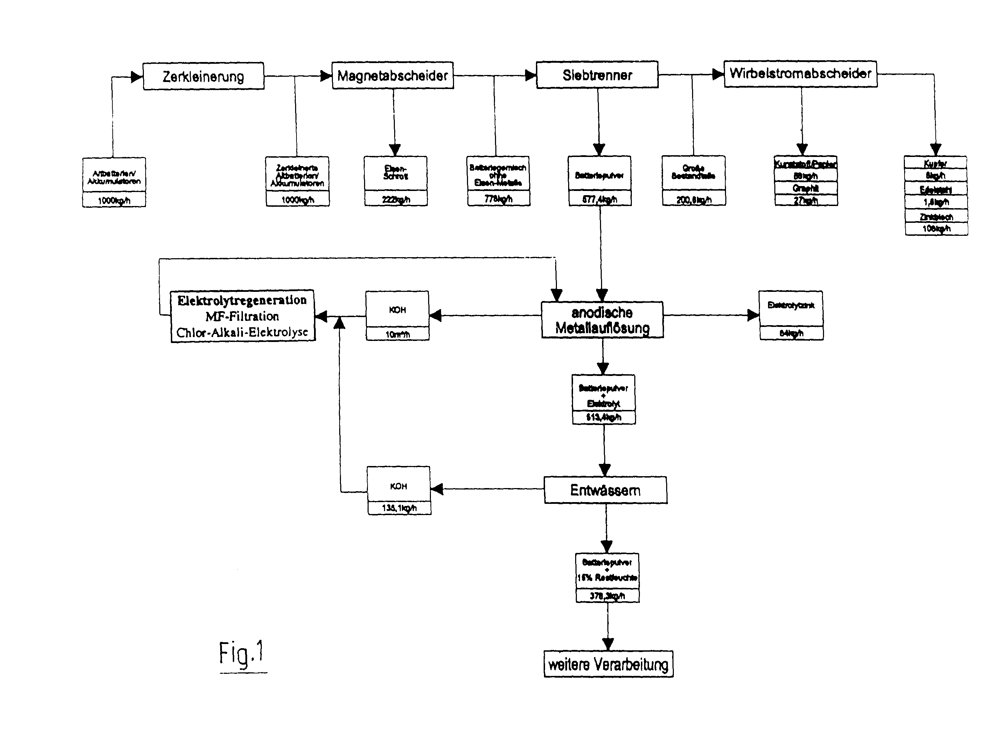

Zunächst wird auf Figur 1 Bezug genommen. In diesem Flußdiagramm sind nicht nur durch entsprechende Blocks die einzelnen Verfahrensschritte schematisch angedeutet; darüber hinaus ist jeweils angegeben, welche Mengen - ausgehend von einer Gesamtmenge von 1 000 kg unsortierter Altbatterien - nach dem jeweiligen Verfahrensschritt ausgeschieden werden oder im weiteren Verfahren verbleiben.

Das Flußdiagramm von Figur 1 beginnt links oben mit der Zerkleinerung der Ausgangsmenge von 1 000 kg unsortierten Altbatterien. Diese Zerkleinerung dient dem Vorbereiten der anschließenden Trennvorgänge bzw. der naßchemischen Aufbereitung. Die zerkleinerten Batterien werden dann durch einen Magnetabscheider geführt, in welchem Eisenschrott in einer Menge von 222 kg entfernt werden. Das verbleibende zerkleinerte Batteriegemisch, dem nunmehr die Eisenmetalle fehlen, in einer Gesamtmenge von 778 kg werden einem Siebtrenner zugeführt. Sie enthalten an dieser Stelle noch die groben unmagnetischen Bestandteile Zinkblech, Edelstahl, Messing, Kunststoff, Papier, Kohle und Graphit sowie das "Passivgut", nämlich das weiter aufzuarbeitende Batteriepulver.

Die Siebtrennung erfolgt mit einer Maschengröße von etwa 2 mm.

Der grobe Siebüberlauf umfaßt eine Menge von etwa 200,6 kg, die in einem Wirbelstromabscheider weiter verarbeitet werden. Dieser trennt die nicht metallischen Bestandteile, nämlich Kunststoff und Papier in einer Menge von etwa 58 kg sowie Graphit in einer Menge von etwa 27 kg, einerseits von den metallischen Grobbestandteilen, nämlich Kupfer in einer Menge von etwa 6 kg, Edelstahl in einer Menge von etwa 1,6 kg und Zinkblech in einer Menge von etwa 106 kg andererseits.

Die bis zu dieser Stelle gewonnenen Materialien, nämlich Eisenschrott, Kunststoff, Papier, Graphit, Kupfer, Edelstahl und Zinkblech werden in bekannter Weise einer Wiederverwertung zugeführt.

Das als Siebunterlauf aus dem Siebtrenner in einer Menge von 577,4 kg kommende Batteriepulver wird nun einem Prozeß zugeführt, welcher der bekannten Kupferraffination ähnelt und in dem eine Trennung des im Batteriepulver noch hauptsächlich enthaltenen Metalls Zink von anderen Metallen und Substanzen erfolgt. Zink liegt in dem Batteriepulver sowohl metallisch als auch in Hydroxid- und Oxidform vor. Zinkhydroxid und Zinkoxid gehen durch ihren amphoteren Charakter bei einem pH-Wert über 10,8 als Zinkat in Lösung über. Um nun auch das metallische Zink, welches an der hier betrachteten Stelle des Verfahrens in Pulverform vorliegt, in Lösung zu bringen, wird der Prozeß der "anodischen Metallauflösung" eingesetzt. Hierzu wird das das Zinkpulver enthaltende Batteriepulver in Berühung mit einer Anode gebracht, welche in den alkalischen Elektrolyten eintaucht. Gegenpol dieser Elektrolyse ist eine Kathode, die in denselben Elektrolyten eintaucht und in nachfolgend noch zu beschreibender Weise der (Wieder-Gewinnung des metallischen Zinks dient. An der Anode findet eine Oxidation des metallischen Pulvers statt, wobei die Reihenfolge der Oxidation verschiedener Metalle sich nach der elektrochemischen Spannungsreihe richtet. Da Zink eines der unedelsten Metalle ist, welches sich im Batteriepulver befindet, kann durch eine geeignete Potentialwahl bei der anodischen Metallauflösung dafür gesorgt werden, daß praktisch nur Zinkionen in Lösung gehen. Sollte auch edleres Metall als Zink aufgelöst werden, würde dieses in Form schwerlöslicher Hydroxide ausfallen.

Dabei ist jedoch zu beachten, daß durch die Batterien Ammoniumchlorid eingeschleppt werden kann. Dies kann dazu führen, daß die Metallhydroxide von Zink, Kupfer, Nickel und Cadmium als Amminkomplexe in der Lösung vorliegen.

Die in dem Elektrolyten nach der anodischen Metallauflösung vorliegenden Metallionen, also zum überwiegenden Teil Zinkionen, in geringem Umfang aber auch Cadmium-, Nickel- und Kupfer-Amminionen, scheiden sich bei dem Elektrolyseprozeß an der Kathode ab. Auf diese Weise wird Elektrolytzink in einer Menge von etwa 54 kg erhalten.

Das als Anodenschlamm zurückbleibende Restbatteriepulver sowie hieran anhaftender Elektrolyt in einer Gesamtmenge von 513 kg wird entwässert. Dabei wird der Elektrolyt (z. B. KOH) in einer Menge von 135,1 kg wiedergewonnen. Restliches Batteriepulver, welches noch eine Restfeuchte von 15 % aufweist, wird in einer Menge von 378,3 kg einer weiteren Verarbeitung zugeführt, die im vorliegenden Zusammenhang nicht mehr von Interesse ist.

Wie bereits erwähnt, enthalten die Batterien, deren Batteriepulver der anodischen Metallauflösung zugeführt wird, Ammoniumchlorid, welches durch den stark alkalischen Charakter der Lauge im Elektrolyten vertrieben wird und als Ammoniak ausgast. Da dieses nicht frei in die Umwelt gelangen darf, muß es durch eine entsprechende Absaugung aufgefangen werden. Gleiches gilt für das gasförmige Chlor, welches sich aus dem im Batteriepulver enthaltenden Chlorid an der Anode bildet.

Die Zufuhr von Ammoniumchlorid und Zinkchlorid aus dem Batteriepulver in den Elektrolyten muß in Intervallen rückgängig gemacht werden, um den freien Anteil an Hydroxidionen für die Metallionen hochzuhalten. Wie Figur 1 zu entnehmen ist, wird daher der in der anodischen Metallauflösung und -gewinnung verwendete Elektrolyt (im dargestellten Falle KOH) einer Chlor-Alkali-Elektrolyse zugeführt. Bei diesem Verfahren entsteht aus dem sich anreichernden Kaliumchlorid Chlorgas und Kalilauge. Das Chlorgas reagiert sofort mit den vorhandenen Hydroxidionen unter der Bildung von Hypochlorit.

Die in dem Batteriepulver, welches der anodischen Metallauflösung zugeführt wird, enthaltene Kohle ist sehr fein verteilt und färbt im Laufe der Zeit den Elektrolyten schwarz. Der Elektrolyt wird daher, wie ebenfalls in Figur 1 dargestellt, vor oder nach der Chlor-Alkali-Elektrolyse einer Mikrofiltration zugeführt, in welcher die Kohle entfernt wird. Sonach wird er wiederum in der anodischen Metallauflösung verwendet.

Mit dem beschriebenen Verfahren läßt sich nach alledem die zu Beginn vorhandene Altbatteriemenge um fast 65 % reduzieren. Ca. 35 % bleiben nach der anodischen Metallauflösung und der elektrolytischen Zinkgewinnung als ungelöstes Gemisch übrig. Dieses kann nach derzeitigem Stand für etwa 490 DM/t entsorgt oder durch eine weitere Behandlung, z. B. durch einen progressiven Ionenaustausch, weiter verringert werden. Die Betriebskosten des Verfahrens werden weiter dadurch reduziert, daß das Zink in der Elektrolyse mit einer hohen Reinheit von 94 bis 99 % erhalten wird und auf dem Metallmarkt veräußert werden kann.

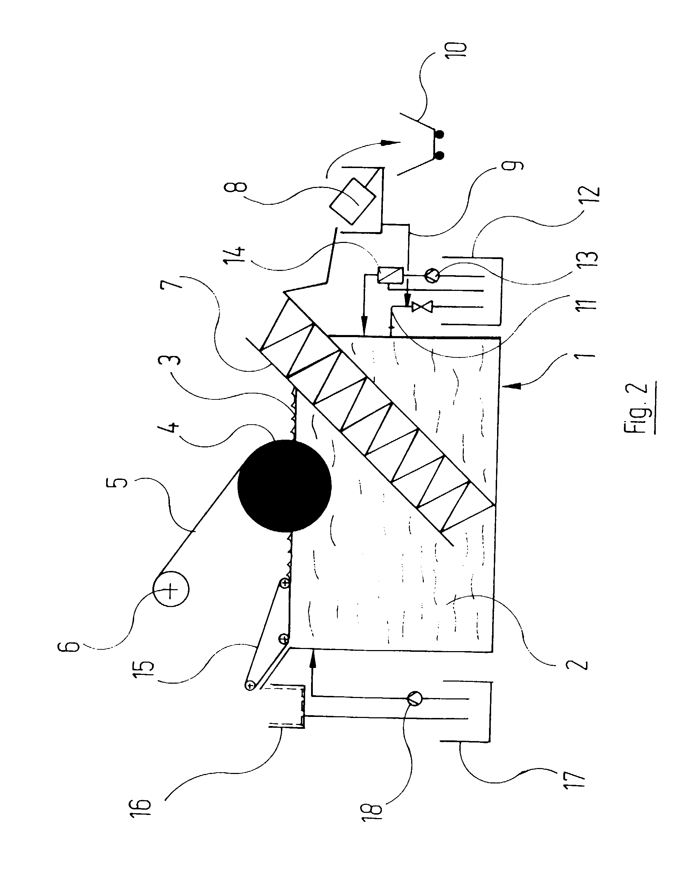

In Figur 2 ist schematisch die Vorrichtung dargestellt, in welcher der zentrale Schritt des oben geschilderten Verfahrens, nämlich die anodische Metallauflösung und elektrolytische Gewinnung des metallischen Zinks, durchgeführt wird. Diese Vorrichtung umfaßt einen Elektrolytbehälter 1, der bis zu dem Niveau 3 mit einem alkalischen Elektrolyten, beispielsweise mit der schon erwähnten etwa 15 %igen Kaliumhydroxidlösung, angefüllt ist. In diesen Elektrolyten 2 taucht von oben her eine zylinderförmige Kathode 4 aus Edelstahl, die um ihre Längsachse verdrehbar ist, etwa zur Hälfte ein. An der Zylindermantelfläche der Kathode 4 scheidet sich elektrolytisch das metallische Zink in Form einer Folie 5 ab, die von der Kathode 4 abgezogen und auf einer Vorratshaspel 6 aufgewickelt werden kann.

In den Elektrolyten 2 taucht ferner unter schrägem Winkel eine aus Graphit geformte Anode 7 ein. Die Anode 7 hat die Form einer Förderwendel und ist ebenfalls um ihre Längsachse drehbar. Der Drehsinn ist dabei so auf die Wendelform abgestimmt, daß sich eine Förderwirkung von unten nach oben ergibt. Bei der Drehung der Anode 7 wird daher der unlösliche Anodenschlamm, welcher sich im Bereich des Bodens des Behälters 1 in der Nähe der Anode 7 sammelt, nach oben befördert, dort ausgeworfen und in die schematisch dargestellte Zentrifuge 8 eingebracht. Aus der Zentrifuge 8 wird einerseits der wiedergewonnene Elektrolyt über die Leitung 9 in den Behälter 1 zurückgegeben; andererseits wird das entwässerte Batteriepulver (welches gemäß Figur 1 noch 15 % Restfeuchte enthält) der weiteren Verarbeitung zugeführt, die hier schematisch durch einen Wagen 10 angedeutet ist.

Anode 7 und Kathode 4 sind mit den entsprechenden Polen einer in der Zeichnung nicht dargestellten Gleichspannungsquelle verbunden.

Ein Teil des Elektrolyten 2 im Behälter 1 wird über eine Leitung 11 laufend dem Behälter 1 entnommen und einem Nebenbehälter 12 zugeführt. In diesem kann die oben bereits erwähnte Alkali-Chlor-Elektrolyse durchgeführt werden. Die entsprechenden Elektroden sind in Figur 2 nicht angezeigt, ebensowenig wie die Absaug- und ggf. Gaswaschanlage.

Der so regenerierte Elektrolyt wird mit Hilfe einer Pumpe dem Nebenbehälter 12 entnommen und über ein Mikrofilter 14 wieder dem (Haupt-)Behälter 1 zugegeben.

Auf der Oberfläche 3 des Elektrolyten 2 im Behälter 1 schwimmen leichtere, im zugeführten Batteriepulver noch enthaltene Komponenten auf. Dabei kann es sich um Restbestandteile aus Papier und Kunststoff handeln, welche mit Hilfe eines schematisch dargestellten Oberflächenräumers 15 abgeschöpft und in ein Tropfgefäß 16 ausgetragen werden. Der von diesen leichten Bestandteilen abtropfende Elektrolyt gelangt zunächst in einen Hilfsbehälter 17 und wird von dort mit Hilfe einer Pumpe 18 wieder in den (Haupt-)Behälter 1 zurückgegeben.

## Patentansprüche

1. Verfahren zur Verwertung unsortierter Altbatterien, bei dem diese zerkleinert, von groben Partikeln durch Sieben befreit und das verbleibende Batteriepulver naßmetallurgisch aufbereitet wird,
dadurch gekennzeichnet, daß
a) das nach dem Sieben verbleibende Batteriepulver in einen alkalischen Elektrolyten gegeben wird, dessen pH-Wert so eingestellt ist, daß Zinkionen als Zinkat vorliegen;
b) das in dem Batteriepulver enthaltene metallische Zink selektiv in einem Elektrolyseprozeß anodisch in Lösung gebracht wird;
c) aus dem Elektrolyt durch Elektrolyse metallisches Zink gewonnen wird;
d) das in dem Elektrolyt verbleibende, unlösliche Batteriepulver anderweitig entsorgt wird.

2. Verfahren nach Anspruch 1, dadurch gekennzeichnet, daß das in dem Batteriepulver enhaltene metallische Zink in demselben Elektrolyseprozeß anodisch in Lösung gebracht wird, in dem aus dem Elektrolyt kathodisch metallisches Zink gewonnen wird.

3. Verfahren nach Anspruch 1 oder 2, dadurch gekennzeichnet, daß der Elektrolyt eine wässrige Lösung von Kalium- oder Natrium-Hydroxid ist.

4. Verfahren nach Anspruch 2, dadurch gekennzeichnet, daß die Konzentration des Hydroxids im Elektrolyten etwa 15% beträgt.

5. Verfahren nach einem der vorhergehenden Ansprüche, dadurch gekennzeichnet, daß das sich bei der Elektrolyse aus dem im Batteriepulver enthaltenen Ammoniumchlorid bildende gasförmige Chlor und Ammoniak abgesaugt werden.

6. Verfahren nach Anspruch 5, dadurch gekennzeichnet, daß das gasförmige Chlor und Ammoniak zu Ammoniumchlorid umgesetzt werden.

7. Verfahren nach einem der vorhergehenden Ansprüche, dadurch gekennzeichnet, daß der Elektrolyt durch eine Alkali-Chlor-Elektrolyse regeneriert wird.

8. Verfahren nach einem der vorhergehenden Ansprüche, dadurch gekennzeichnet, daß der Elektrolyt durch eine Mikrofiltration von Kohlenstoffstaub befreit wird.

9. Vorrichtung zur Durchführung des Verfahrens nach einem der vorhergehenden Ansprüche, dadurch gekennzeichnet, daß sie umfaßt:
a) einen den Elektrolyten (2) aufnehmenden Behälter (1);
b) eine zumindest teilweise in den Elektrolyten (2) eintauchende Kathode (4);
c) eine zumindest teilweise in den Elektrolyten (2) eintauchende Anode (7).

10. Vorrichtung nach Anspruch 9, dadurch gekennzeichnet, daß die Kathode (4) als sich um seine Längsachse drehender Zylinder ausgebildet ist.

11. Vorrichtung nach Anspruch 10, dadurch gekennzeichnet, daß der Kathode (4) eine Aufwickelhaspel (6) zugeordnet ist, auf welcher das von der Mantelfläche der Kathode (4) als Folie (5) abziehbare metallische Zink aufwickelbar ist.

12. Vorrichtung nach einem der Ansprüche 9 bis 11, dadurch gekennzeichnet, daß die Kathode (4) aus Edelstahl besteht.

13. Vorrichtung nach einem der Ansprüche 9 bis 12, dadurch gekennzeichnet, daß die Anode (7) als um ihre Längsachse drehbare Förderwendel ausgebildet ist.

14. Vorrichtung nach einem der Ansprüche 9 bis 13, dadurch gekennzeichnet, daß die Anode (7) aus Graphit besteht.

15. Vorrichtung nach einem der Ansprüche 9 bis 14, dadurch gekennzeichnet, daß sie eine Mikrofiltrationseinrichtung (14) umfaßt, mit welcher der im Behälter (1) befindliche Elektrolyt (2) von Kohlenstoffstaub befreit werden kann.

16. Vorrichtung nach einem der Ansprüche 9 bis 13, dadurch gekennzeichnet, daß sie eine Oberflächen-räumeinrichtung (15) aufweist, mit der auf der Oberfläche (3) des Elektrolyten (2) schwimmende Partikel entfernbar sind.

17. Vorrichtung nach einem der Ansprüche 9 bis 16, dadurch gekennzeichnet, daß sie eine Hilfselektrolysezelle aufweist, in welcher zur Regeneration des Elektrolyten (2) eine Alkali-Chlor-Elektrolyse durchführbar ist.

18. Vorrichtung nach einem der Ansprüche 9 bis 17, dadurch gekennzeichnet, daß eine Absaugeinrichtung vorgesehen ist, mit welcher sich bei der Elektrolyse bildende Gase, insbesondere Ammoniak und Chlor, absaugbar sind.

19. Vorrichtung nach einem der Ansprüche 9 bis 18, dadurch gekennzeichnet, daß sie ein Wasserbad aufweist, in dem das abgesaugte Ammoniak mit dem abgesaugten Chlor zu Ammoniumchlorid umgesetzt wird.
